# FASCICULE DE BREVET EUROPEEN

(11) **EP 2 072 361 B1**
(45) Date de publication et mention de la délivrance du brevet: **09.03.2011**
(21) Numéro de dépôt: 08171916.3
(22) Date de dépôt: 17.12.2008
(51) Int. Cl.: B60T 13/24, B60T 13/52

(54) **Dispositif de commande hydraulique d'un maître-cylindre de frein**
Vorrichtung zur hydraulischen Steuerung eines Hauptbremszylinders
Hydraulic control device for a brake master cylinder

(30) Priorité: 21.12.2007 FR 0709133
(43) Date de publication de la demande: 24.06.2009
(73) Titulaire: Robert Bosch GmbH, 70442 Stuttgart (DE)
(72) Inventeur: Sprocq, Raynald, 77450 ESBLY (FR); Anderson, Chris, 75002 PARIS (FR); Richard, Philippe, 77500 CHELLES (FR); Fourcade, Jean, 35890 LAILLE (FR)
(74) Mandataire: Hurwic, Aleksander Wiktor

(56) Documents cités:
- WO-A-2007/042413
- WO-A-2007/080106

## Description

L'invention concerne un système de commande de freinage et plus particulièrement un système permettant de commander un système de freinage hydraulique pour véhicule automobile.

Les systèmes de freinage hydrauliques couramment utilisés dans les véhicules automobiles comportent actuellement un maître cylindre de frein qui est commandé par un servomoteur pneumatique d'assistance au freinage, lequel est actionné par le conducteur à l'aide de la pédale de frein.

Le servomoteur d'assistance au freinage est généralement placé dans le compartiment avant du véhicule, lequel est généralement le compartiment moteur.

Le servomoteur comporte un boîtier qui est fermé de manière étanche par un couvercle. A l'intérieur de ce boîtier se trouvent deux chambres séparées par un piston. Une chambre est au vide, l'autre chambre est au vide ou la pression atmosphérique. La différence de pressions entre les deux chambres fournit l'assistance et permet d'actionner le piston comme cela est connu dans la technique, et de retransmettre des efforts transmis par une tige de commande à une tige de poussée laquelle communique les efforts au maître cylindre de freins.

Il est connu dans la technique de fixer le servomoteur au tablier du véhicule qui sépare le compartiment moteur de la cabine du conducteur.

Une partie du servomoteur traverse le tablier et notamment la tige de commande pour qu'elle puisse être commandée par la pédale de frein lorsque celle-ci est actionnée par le conducteur.

En ce qui concerne le maître cylindre, il est fixé une paroi du boîtier du servomoteur par des dispositifs à vis et à écrous.

La place du servomoteur d'assistance au freinage et du maître cylindre de freins est donc déterminée par la position du pédalier.

Le servomoteur d'assistance au freinage et le maître cylindre constituent un ensemble relativement volumineux et son emplacement à proximité de la pédale de frein constitue une contrainte pour le concepteur du véhicule automobile.

Par ailleurs, la fixation du maître cylindre sur le servomoteur d'assistance au freinage conduit à concevoir un servomoteur relativement robuste.

Par ailleurs, WO 2007 042413 décrit un système de freinage comportant un simulateur de commande d'un servomoteur pneumatique entraînant un piston hydraulique d'un premier maître-cylindre d'assistance générant une pression d'assistance fournie à une chambre de poussée d'un second maître-cylindre.

En cas de panne de vide, la génération de pression dans le second maître-cylindre est contrariée par le simulateur.

**En outre,** WO 2007 080106 **décrit un simulateur de commande en effort.**

L'invention fournit une solution permettant de se libérer de ces contraintes.

L'invention concerne donc un système de commande de frein d'un véhicule comportant un maître cylindre de frein et un servomoteur d'assistance au freinage actionné par un organe de commande tel qu'une pédale de frein.

Selon l'invention, le servomoteur est couplé hydrauliquement au maître cylindre de frein et n'est pas couplé mécaniquement au piston primaire du maître cylindre. De plus, le système de l'invention comporte un dispositif de pression auxiliaire qui est commandé par l'organe de commande et qui permet de commander le servomoteur d'assistance au freinage.

L'invention a pour objet un système de commande de frein caractérisé en ce qu'une source de fluide hydraulique sous pression est reliée sur commande du dispositif de pression auxiliaire à une chambre de poussée du maître-cylindre.

L'invention a également pour objet un système de commande de frein caractérisé en ce que la valve d'isolation fermée au repos, de la source de pression auxiliaire est commandée par l'organe de commande et le servomoteur d'assistance.

Selon une forme de réalisation avantageuse du système de l'invention, le dispositif de pression auxiliaire comporte une enceinte remplie d'un fluide et un piston qui coulisse dans cette enceinte sous la commande de l'organe de commande. Cette enceinte est alors reliée par une première canalisation à une vanne de commande du servomoteur d'assistance au freinage.

L'invention prévoit alors avantageusement que le maître cylindre de frein possède une chambre de commande permettant de commander le piston primaire du maître cylindre de frein, cette chambre de commande étant située du côté opposé à la chambre primaire par rapport au piston primaire et elle prévoit que le servomoteur comporte une sortie haute pression reliée à cette chambre de commande par une deuxième canalisation pour induire une pression dans cette chambre de commande et commander le piston primaire.

Selon une forme de réalisation du système de l'invention, le servomoteur d'assistance au freinage est un servomoteur hydraulique et il comporte avantageusement une pompe hydraulique destinée à fournir un fluide sous haute pression au servomoteur d'assistance au freinage. Ladite vanne de commande permet de transmettre ce fluide sous haute pression à ladite chambre de commande à l'aide de la deuxième canalisation.

Selon une forme de réalisation de l'invention, le servomoteur d'assistance au freinage comporte une enceinte d'entrée dans laquelle coulisse un piston de commande qui permet de commander une première vanne laquelle est mobile dans une chambre de sortie. Cette chambre de sortie est reliée à ladite deuxième canalisation.

La première vanne permet de commander une deuxième vanne, laquelle permet de mettre en communication la pompe hydraulique avec la chambre de sortie.

Avantageusement, le piston de commande possède un piston central qui agit sur la première vanne et qui coulisse dans un piston annulaire. Celui-ci coulisse dans l'enceinte d'entrée et s'appuie contre un ressort dont le rôle est d'opposer une résistance au déplacement de ce piston annulaire pour simuler un effort de freinage vers l'organe de commande.

Avantageusement, la première vanne permet de relier la chambre de sortie au réservoir de liquide de frein pour permettre un relâchement de la pression dans la chambre de sortie et donc dans la chambre de commande du maître cylindre.

L'invention prévoit également dans une forme de réalisation que le maître cylindre comporte avantageusement un piston de commande de secours qui peut coulisser dans la chambre de commande sous l'action d'un fluide transmis par le dispositif de pression auxiliaire par une troisième canalisation.

Selon une variante de réalisation du système de l'invention, le dispositif de pression auxiliaire est située dans le maître cylindre de frein selon l'axe de celui-ci et est accolée à ladite chambre de commande.

Dans cette variante de réalisation la chambre de commande est de préférence séparée de l'enceinte du dispositif de pression auxiliaire par un piston mobile axialement.

Selon une autre variante de réalisation du système de l'invention, le maître cylindre et le servomoteur d'assistance au freinage sont en une seule pièce.

L'invention concerne également une forme de réalisation dans lequel le servomoteur d'assistance au freinage est un servomoteur pneumatique. Dans une telle forme de réalisation, le système de l'invention prévoit une chambre de surpression commandée par le servomoteur pneumatique et destinée à fournir un fluide sous haute pression à ladite chambre de commande du maître cylindre par l'intermédiaire de la deuxième canalisation.

Selon une forme de réalisation avantageuse dans laquelle le servomoteur est un servomoteur pneumatique, celui-ci comporte:
- un boîtier possédant un axe longitudinal,
- une jupe montée à coulissement étanche dans le boîtier selon l'axe longitudinal et divisant l'espace intérieur du boîtier en une chambre à basse pression et en une chambre à pression variable,
- une vanne trois voies possédant une chambre d'actionnement actionnée par ladite chambre de pression auxiliaire et permettant de mettre en communication la chambre à pression variable avec la chambre basse pression, ou d'isoler la chambre à pression variable de la chambre basse pression, ou encore de mettre en communication la chambre à pression variable avec une source de pression permettant d'établir une différence de pressions entre la chambre à pression variable et la chambre basse pression.

Ladite chambre de surpression comporte un piston mobile dans l'enceinte de surpression et est commandée par le déplacement de ladite jupe.

Selon une forme de réalisation avantageuse du système de l'invention, le servomoteur d'assistance au freinage comporte un piston de simulation mobile dans la chambre d'actionnement. Ce piston de simulation se déplace sous l'action de la pression dans la chambre d'actionnement et agit sur la vanne trois voies par l'intermédiaire d'un ressort de simulation.

Selon une autre forme de réalisation le servomoteur d'assistance au freinage comporte un piston de simulation qui est mobile dans le dispositif de pression auxiliaire. Ce piston de simulation se déplace alors sous l'action de la pression dans le dispositif de pression auxiliaire et agissant sur un ressort de simulation.

L'invention prévoit avantageusement que la vanne trois voies est fixées dans une paroi du boîtier du servomoteur pneumatique d'assistance au freinage.

Selon une forme de réalisation de l'invention, la vanne trois voies comporte:
- un siège de clapet annulaire qui est de préférence fixe,
- un clapet mobile destiné, en s'appliquant contre le siège de clapet fixe, à commander l'ouverture et la fermeture d'un premier passage de la vanne trois voies et à isoler ainsi l'une de l'autre ou non les chambres à basse pression et à pression variable,
- un palpeur mobile permettant de commander l'ouverture et la fermeture d'un deuxième passage entre la chambre à pression variable et une source de surpression en s'écartant ou en se rapprochant dudit clapet mobile.

Les différents objets et caractéristiques de l'invention apparaîtront plus clairement dans la description qui va suivre et dans les figures annexées qui représentent:
- la figure 1, un exemple de réalisation simplifié du système de commande de freinage selon l'invention,
- la figure 2, un exemple de réalisation détaillé du système de commande selon l'invention utilisant un servomoteur d'assistance au freinage hydraulique,
- la figure 3, une variante de réalisation du système de la figure 2 dans laquelle la chambre de commande est intégrée au maître cylindre de frein,
- la figure 4, une autre variante de réalisation du système de la figure 2 dans laquelle la chambre de commande et le servomoteur d'assistance au freinage hydraulique sont tous deux intégrés au maître cylindre de frein,
- la figure 5, une vue en coupe d'un exemple de réalisation du système de l'invention dans lequel le servomoteur d'assistance au freinage est un servomoteur d'assistance au freinage pneumatique,
- la figure 6, une variante de réalisation du système de la figure 5 dans laquelle le ressort de simulation de l'effort de freinage est situé dans le maître cylindre au lieu d'être situé dans le servomoteur.

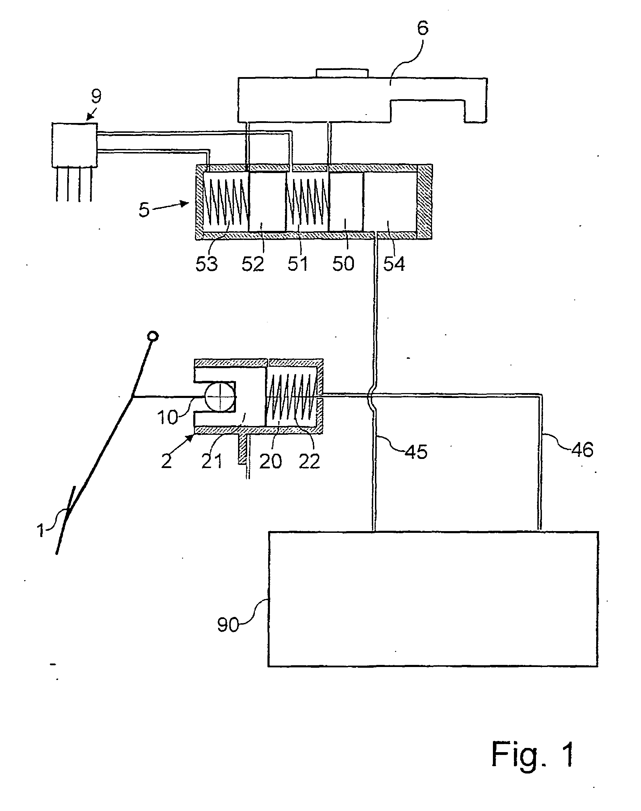

En se reportant à la figure 1, on va donc tout d'abord décrire un exemple de réalisation du système de commande de freinage selon l'invention.

Ce système comporte:
- Un dispositif de pression auxiliaire 2 commandé par l'organe de commande 1 (la pédale de frein) et permettant d'induire une pression dans la canalisation 46,
- un servomoteur d'assistance au freinage 90 commandé par la pression induite dans la canalisation 46 et permettant de transmettre un ordre de freinage par la canalisation 45,
- un maître cylindre de frein 5 contenant une chambre primaire 51 et une chambre secondaire 53 alimentées en liquide de frein par le réservoir 4. Un piston primaire 50 et un piston secondaire 52 permettent d'induire des pressions de freinage dans les chambres 51 et 53 respectivement. Ces pressions de freinage sont communiquées au circuit de freinage 9 du véhicule. Le maître cylindre de frein comporte en outre une chambre de commande 54 qui est reliée au servomoteur d'assistance au freinage 90 par la canalisation 45.

Le dispositif de pression auxiliaire 2 comporte une cavité 20 dans laquelle coulisse un piston 21 qui est commandé par la pédale de frein 1.

De préférence, la cavité 20 est remplie d'un fluide ce qui permet de transmettre une commande hydraulique au servomoteur d'assistance au freinage.

Selon cette forme de réalisation du système de commande de l'invention, le dispositif de pression auxiliaire 2 est associé à la pédale de frein. Par contre, non seulement le maître cylindre de frein n'est pas nécessairement fixé au servomoteur d'assistance au freinage, mais encore, le maître cylindre de frein et le servomoteur d'assistance au freinage peuvent être placés séparément n'importe où dans le véhicule.

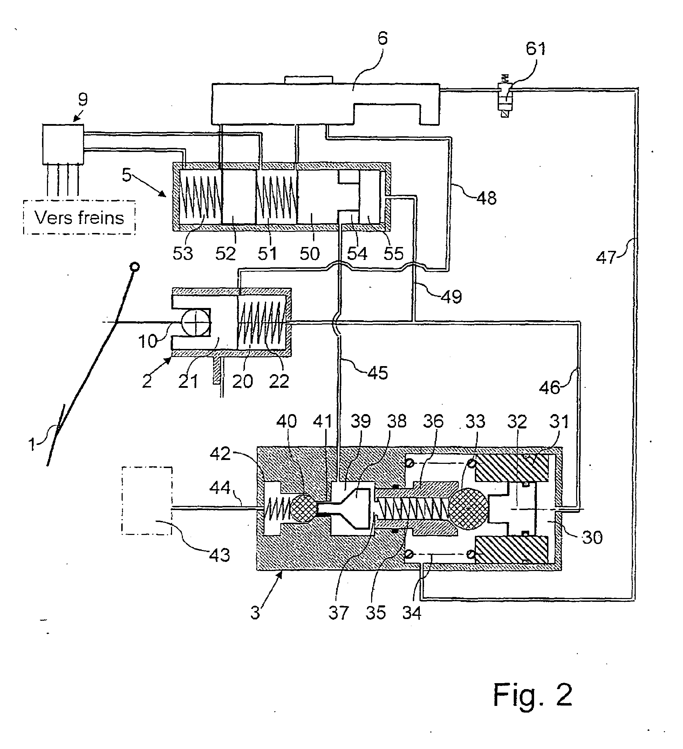

En se reportant à la figure 2, on va maintenant décrire un exemple de réalisation du système de la figure 1, dans lequel le servomoteur d'assistance au freinage fournit une commande hydraulique au maître cylindre de frein par la canalisation 45.

Le servomoteur 3 comporte une chambre d'entrée 30qui est reliée par la canalisation 46 au dispositif de pression auxiliaire 2.

Un piston annulaire 31 est mobile axialement dans la chambre d'entrée 30 et un piston central 32 est mobile axialement dans le piston 31.

Une valve 33 est destinée à s'appuyer sur un siège de clapet 36 mobile axialement.

Le clapet mobile 36 est destiné à commander le déplacement axial du poussoir 38 lequel est destiné à pousser sur la vanne 40.

Une pompe de fluide sous pression 43 est raccordée par une canalisation 44 à une cavité d'accès 42 du fluide sous pression. La vanne 40 permet de mettre en communication une chambre de sortie 39, à laquelle est reliée la canalisation 45, avec la cavité d'accès 42. La vanne 40 permet donc de relier la chambre de commande 54 à la pompe de fluide sous pression par la canalisation 45, la chambre de sortie 39, la vanne 40, la cavité d'accès 42 et la canalisation 44.

On va maintenant décrire le fonctionnement du système de la figure 2.

Au repos, le clapet 40 est fermé et isole la pompe de fluide sous pression de chambre de sortie 39.

Le clapet 33 n'est pas appliqué contre le siège de clapet 36. La chambre de commande 54 est en communication avec le réservoir de liquide de frein par la canalisation 45, la vanne 33 et la canalisation 47. Le fluide de la chambre de commande 54 est donc à la pression atmosphérique. Les chambres primaire et secondaire 51 et 53 sont donc également à cette pression atmosphérique et ne fournissent pas d'ordre de freinage aux circuits 8.

Lorsque le conducteur appuie sur la pédale de frein 1, il commande le déplacement du piston 21 vers la droite, le fluide est comprimé dans la cavité 20. Un fluide sous pression est transmis par la canalisation 46 à la chambre d'entrée 30. Les pistons 31 et 32 se déplace vers la gauche. La vanne 33 est appliquée sur le siège du clapet 36. La chambre de sortie est isolée du réservoir de liquide de frein.

Lorsque le conducteur continue à appuyer sur la pédale de frein, le piston 32 pousse la vanne 33 et le clapet 36 vers la gauche. Le clapet 36 commande par l'intermédiaire du poussoir 38 le déplacement vers la gauche de la vanne 40. La vanne 40 s'ouvre et connecte la pompe de fluide sous pression 43 à la chambre de sortie 39. La mise en oeuvre de source hydraulique sous pression telle qu'une pompe hydraulique avantageusement associée à un accumulateur hydraulique haute pression connecté à la chambre de poussée directement ou, avantageusement à travers d'une électrovalve de commande offre un système plus compact et plus fiable. En effet, le fonctionnement du système de freinage n'est pas perturbé par une éventuelle panne de vide. De plus, on peut installer un tel système selon l'invention sur des véhicules qui ne disposent pas de source de vide tels que les véhicules diesel, véhicules électriques, véhicules à essence haute performance notamment les véhicules hybrides.

Le fluide contenu dans la chambre de commande 54 est mis sous pression et exerce une pression sur le piston primaire 50 du maître cylindre 5. Le piston primaire 50 et le piston secondaire 52 se déplacent vers la gauche et mettent sous pression les chambres primaire et secondaire du maître cylindre. Une pression de freinage est transmise aux circuits de freinage 9.

Par ailleurs, la pression dans la chambre de sortie 39 exerce un effort vers la droite sur le poussoir 38. Lorsque le freinage exercé correspond au freinage demandé par le conducteur, le poussoir permet la fermeture de la vanne 40. La pompe de fluide sous pression est isolée de la chambre de sortie 39. La pression dans la chambre de commande 54 est maintenue. Dans cet état d'équilibre les vannes 33 et 40 sont fermées.

On notera que, avantageusement, le déplacement vers la gauche du piston annulaire 31 est contrarié par un ressort 34. Ce ressort permet d'opposer un effort au déplacement du piston 21. Il permet ainsi de simuler un effort de freinage sur la pédale de frein du conducteur.

Par ailleurs, l'invention prévoit également éventuellement de relier le dispositif de pression auxiliaire 2 au maître cylindre par une canalisation 49. On prévoit alors également une vanne 61.

Ces dispositions permettent par exemple en cas de défaillance de la pompe de fluide sous pression, de fermer la vanne 7. Les pistons 31 et 32 ne peuvent alors plus se déplacer vers la gauche. Par contre le dispositif de pression auxiliaire 2 envoie un fluide sous pression vers le maître cylindre pour commander le déplacement vers la gauche d'un piston de commande secours 55. Celui-ci commande alors les pistons primaire et secondaire du maître cylindre.

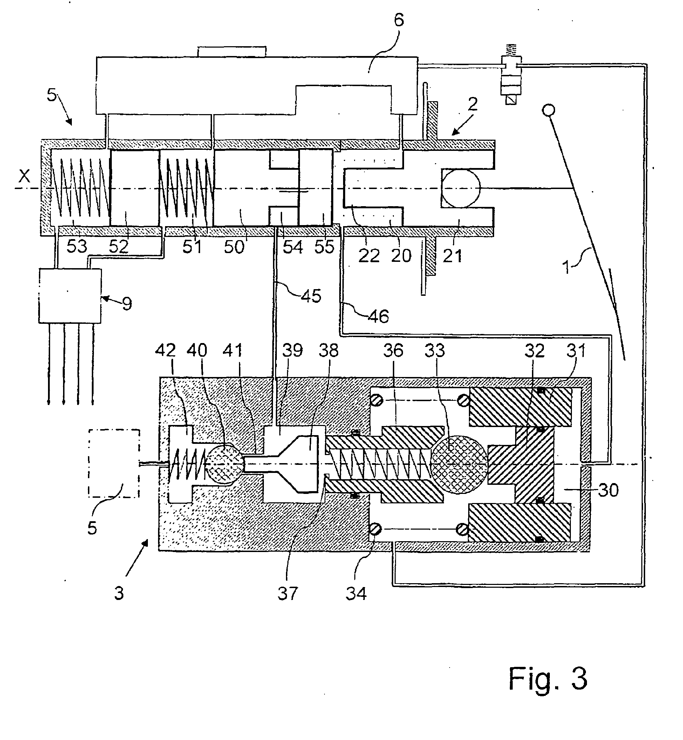

La figure 3 représente une variante de réalisation du système de la figure 2 dans laquelle le dispositif de pression auxiliaire 2 est intégré au maître cylindre 5. La cavité 20 du dispositif 2 est placée selon l'axe du maître cylindre du côté opposé à la chambre de commande 54 par rapport au piston de défaillance 55.

Comme précédemment, quand le conducteur appuie sur la pédale de frein, le piston 21 induit une pression dans la chambre d'entrée 30, ce qui commande la connexion de la chambre de commande 54 à la source de fluide sous pression.

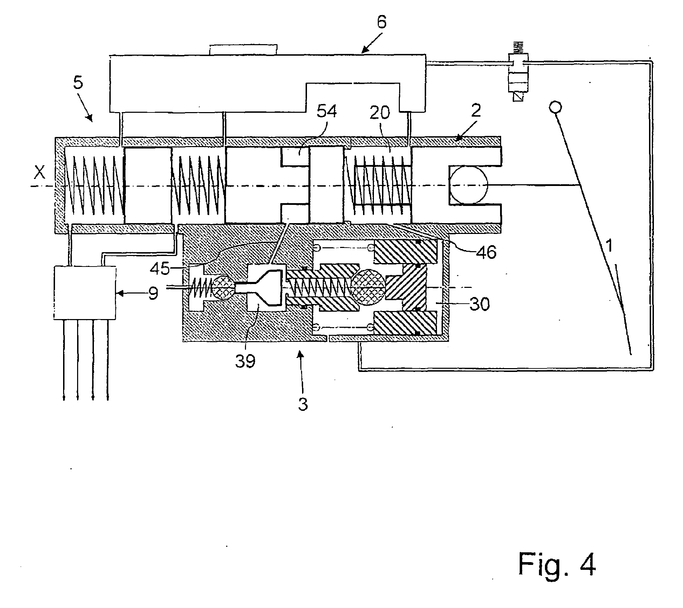

La figure 4 représente en coupe, un exemple de réalisation dans lequel, le maître cylindre 5, le dispositif de pression auxiliaire 2 et le servomoteur d'assistance au freinage 3 sont réalisés en une seule pièce.

Comme on peut le voir sur la figure 4, la paroi qui sépare la partie servomoteur 3 du maître cylindre 5 et de la chambre auxiliaire 2, comporte deux canalisations internes 45 et 46. La canalisation 46 relie le dispositif de pression auxiliaire à la chambre d'entrée 30 du servomoteur et la canalisation 45 relie la chambre de sortie 39 à la chambre de commande 54 du maître cylindre.

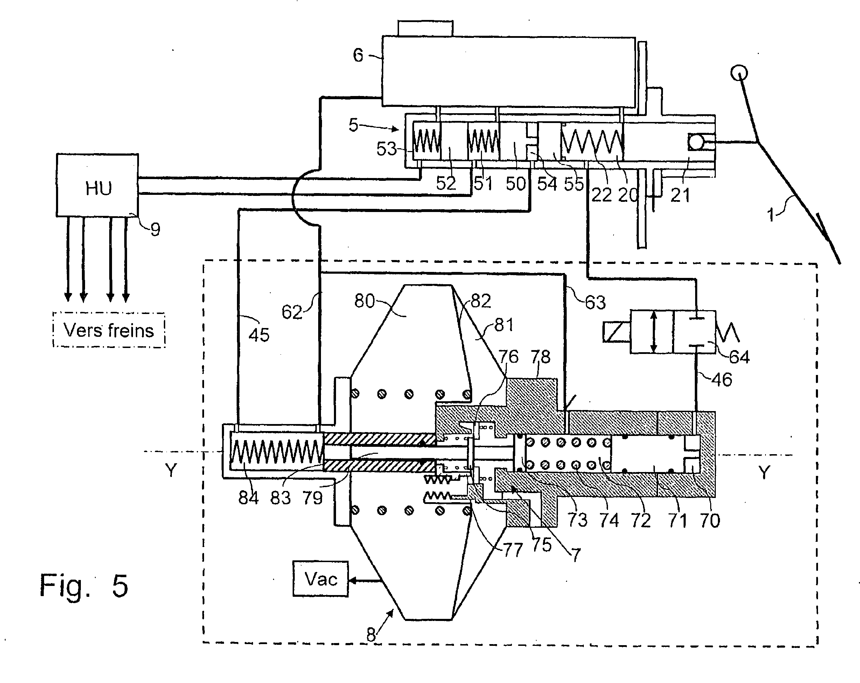

La figure 5 représente une forme de réalisation du système de l'invention dans laquelle le servomoteur d'assistance au freinage fonctionne de manière pneumatique sur la base d'une différence de pressions.

Les composants de ce système qui réalisent les mêmes fonctions que les composants du système des figures 1 à 4 portent de préférence les mêmes références que sur ces figures.

Ce servomoteur comporte un boîtier 8 dont l'intérieur est divisé hermétiquement en deux chambres 80 et 81 par une jupe mobile 82. La chambre 80 que nous appellerons chambre basse pression est reliée à une pompe à dépression Vac qui tend à faire le vide dans la chambre 80. La chambre 81 que nous appellerons chambre à pression variable a sa pression déterminée par la vanne trois voies 7 comme cela va être décrit ci-après.

Le servomoteur comporte en outre une chambre d'entrée 70 dans laquelle coulisse un piston 71 qui permet d'agir sur le déplacement d'un plongeur-distributeur 79.

La vanne trois voies est avantageusement fixée dans la paroi de droite du boîtier du servomoteur. Elle comporte un siège de clapet 77 annulaire qui est de préférence fixe. Un clapet mobile 76 est destiné, selon qu'il est appliqué ou non au siège de clapet 77, à commander l'ouverture ou la fermeture d'un premier passage de la vanne trois voies et à isoler ou non ainsi les chambres à basse pression (80) et à pression variable (81) l'une de l'autre. Un palpeur mobile 75 est solidaire du distributeur-plongeur 79 et permet de commander l'ouverture ou la fermeture d'un deuxième passage entre la chambre à pression variable 81 et une source de surpression (la pression atmosphérique par exemple) en s'écartant ou en se rapprochant dudit clapet mobile 76.

L'enceinte 20 du dispositif de pression auxiliaire 2 est reliée par une canalisation 46 à la chambre d'entrée 70.

Lorsque le système de freinage est au repos, le dispositif de pression auxiliaire 2 n'induit pas de pression dans la chambre d'entrée 70. La vanne trois voies 7 relie la chambre à pression variable 81 à la chambre basse pression 80. La jupe 82 du servomoteur ne tend pas à se déplacer vers la gauche. Le piston 83 est au repos et n'induit pas de pression dans la chambre de surpression 84.

La chambre 84 est reliée au réservoir de liquide frein 6 par la canalisation 62. Elle est donc à la pression atmosphérique ainsi que la chambre de commande 54.

Lorsque le conducteur appuie sur la pédale de frein 1, le fluide dans la cavité 20 est comprimé par le piston 21. La pression augmente dans la chambre d'entrée 70. Le piston 71 se déplace vers la gauche et transmet un effort de déplacement par le ressort 74 au distributeur-plongeur 79. Celui-ci se déplace vers la gauche.

Le clapet 76 se déplace également vers la gauche et vient s'appuyer contre le siège de clapet 77. Il coupe la communication entre les chambres 80 et 81 du servomoteur.

Ensuite, lorsque le conducteur appuie encore plus sur la pédale de frein, le distributeur-plongeur se déplace vers la gauche. Le palpeur mobile 75 s'écarte du clapet 76. La chambre à pression variable 81 est mise à la pression atmosphérique. La différence de pression entre les chambres 80 et 81 implique le déplacement de la jupe 82 vers la gauche. Le piston 83 se déplace vers la gauche dans la chambre de surpression 84. Il obture la canalisation 62. La chambre 84 n'est plus à la pression atmosphérique et elle est mise en pression par le piston 83.

La pression régnant dans la chambre 84 est communiquée à la chambre de commande 54. L'augmentation de la pression dans la chambre 54 commande le déplacement des pistons primaire et secondaire du maître cylindre de frein et, de ce fait, la transmission d'une pression hydraulique au circuit de freinage 9 et aux freins de roues du véhicule.

Dans cette forme de réalisation le ressort 74 oppose un effort de résistance au déplacement du piston 71. Cet effort est ressenti à la pédale de frein et permet de simuler un effort de freinage à l'intention du conducteur.

Par ailleurs l'invention prévoit avantageusement, une vanne de blocage 64 permettant, en cas de défaillance de la source basse pression Vac ou du servomoteur d'assistance au freinage, de bloquer toute transmission par la canalisation 46. Dans le cas d'une telle fermeture de la vanne 64, lorsque le conducteur appuie sur la pédale de frein, le fluide de l'enceinte 20 ne peut pas être refoulé vers la chambre de commande 70 et l'effort exercé par le piston 21 est retransmis au piston de défaillance 55 qui commande alors les déplacements des pistons primaire et secondaire du maître cylindre de frein.

Il est bien entendu que la mise en oeuvre d'une électrovanne 64 d'isolation associée aux dispositifs des figures 1 à 4 et 6 ne sort pas du cadre de la présente invention.

Cette électrovanne est avantageusement fermée au repos et ouverte en fonctionnement de manière à isoler au repos la commande de freinage du simulateur. Ainsi, en cas de panne d'assistance, seul un éventuel ressort 22 s'oppose de manière non productive à la transmission aux freins de l'effort de freinage exercé sur la pédale 1.

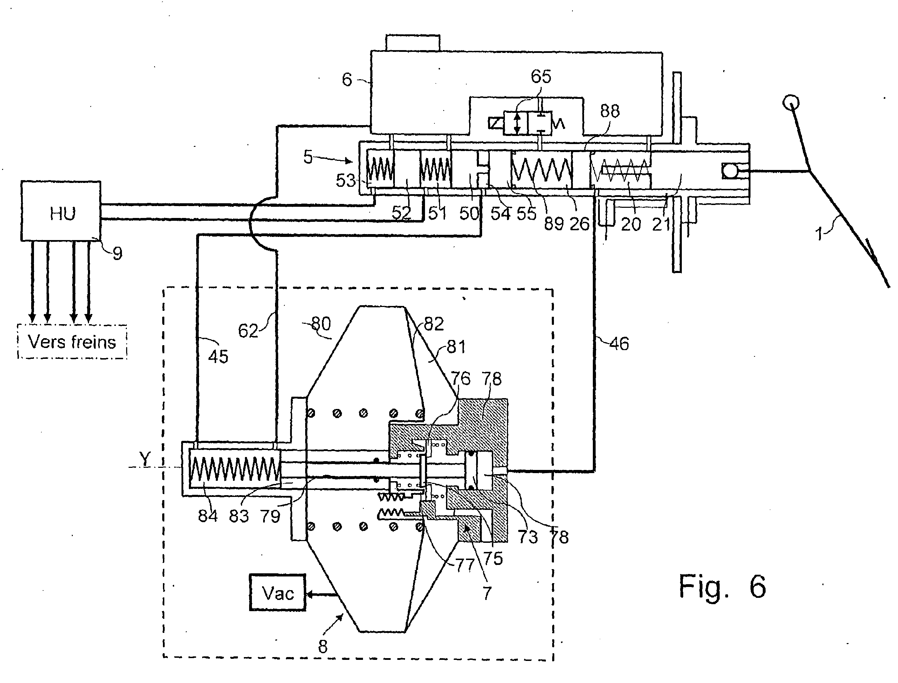

En se reportant à la figure 6, on va maintenant décrire une variante de réalisation du système de la figure 5.

On retrouve dans cette variante de réalisation:
- le servomoteur pneumatique d'assistance au freinage 8 avec la chambre de surpression 84,
- la vanne trois voies 7,
- le réservoir de liquide de frein 6 et le maître cylindre de frein 5 permettant de commander les circuits de freinage 9.

Ce système diffère de celui de la figure 5 par le fait que le ressort de simulation n'est pas situé dans le servomoteur d'assistance au freinage. Il est situé dans le maître cylindre de frein sous la forme du ressort 89. Pour cela, l'enceinte de commande 20 est fermée par un piston 88. Le ressort de simulation 89 est situé entre ce piston 88 et le piston de défaillance 55.

En fonctionnement normal, l'enceinte 26 dans laquelle se trouve le ressort de simulation 89 est reliée au réservoir de liquide de frein 6 par la vanne 65 qui est ouverte. Le piston 88 peut se déplacer dans l'enceinte 26.

Lorsque le conducteur appuie sur la pédale de frein, le piston 21 exerce une pression sur le fluide contenu dans l'enceinte 20. Cette pression est transmise par la canalisation 46 à la chambre d'entrée 78 pour commander la vanne trois voies et pour commander le maître cylindre de frein comme cela a été décrit précédemment.

La pression exercée par le piston 21 s'exerce aussi sur le piston 88. Le ressort 89 oppose un effort qui tend à s'opposer au déplacement du piston 88. Cet effort est ressenti à la pédale de frein et permet de simuler un effort de freinage à l'intention du conducteur.

En cas de défaillance de la source basse pression Vac et/ou du servomoteur d'assistance au freinage, la défaillance est détecté par tout système de détection connu dans la technique. Cela peut être par exemple un système détection de la pression dans la chambre 80 du servomoteur ou dans la source basse pression. Ou bien cela peut être également un système de détection de pression dans le maître cylindre ou dans les circuits de freinage auquel est associé à un dispositif de mesure du déplacement de la pédale de frein.

Lorsque ces dispositifs détectent une défaillance, ils commandent la fermeture de la vanne 65. La chambre 26 ne peut plus communiquer avec le réservoir de liquide de frein. Lorsque le conducteur appuie sur la pédale de frein, le piston 21 exerce une pression sur le piston de défaillance 88. Celui-ci communique cette pression au piston 54 par l'intermédiaire du liquide de frein contenu dans l'enceinte 26. L'effort exercé sur le piston 54 est communiqué par celui-ci au piston primaire du maître cylindre de frein.

Dans la description qui précède la source basse pression Vac est une source qui tend à faire le vide dans la chambre 80 du servomoteur et l'une des fonctions de la vanne trois voies est de mettre la chambre 81 à la pression atmosphérique.

Cependant, sans sortir du cadre de l'invention, on peut envisager toute autre disposition qui permette de créer une différence de pression entre les chambres 80 et 81. Par exemple, on peut prévoir que la chambre 81 peut être reliée à une pression élevée.

## Revendications

1. Système de commande de frein d'un véhicule comportant un maître cylindre de frein (5) et un servomoteur d'assistance au freinage (90, 3, 8) actionné par un organe de commande (1), ***où*** le
servomoteur d'assistance au freinage est couplé hydrauliquement au maître cylindre de frein (5) et n'est pas couplé mécaniquement au piston primaire (50) du maître cylindre et ***comportant***
un dispositif de pression auxiliaire (2) commandé par l'organe de commande (1) et permettant de commander le servomoteur d'assistance au freinage (90, 3, 8)
***caractérisé en ce qu'* il comporte une valve fermée au repos, d'isolation (64) *du dispositif* de pression auxiliaire (2) commandée par l'organe de commande (1) et du servomoteur d'assistance (3).**

2. Système de commande de frein selon la revendication 1 **caractérisé en ce qu'**il comporte une source de fluide hydraulique sous pression reliée sur commande du dispositif de pression auxiliaire (2) à une chambre de poussée du maître-cylindre (54).

3. Système de commande frein selon la revendication 1 ou **2 caractérisé en ce que** le dispositif de pression auxiliaire (2) comporte une enceinte (20) remplie d'un fluide et un piston (21) qui coulisse dans cette enceinte sous la commande de l'organe de commande (1), ladite enceinte étant reliée par une première canalisation (46) à une vanne de commande (33, 40, 7) du servomoteur d'assistance au freinage (90, 3, 8).

4. Système de commande frein selon la revendication 3, **caractérisé en ce que** le maître cylindre de frein (5) possède une chambre de commande (54) permettant de commander le piston primaire (50), ladite chambre de commande étant située du côté opposé à la chambre primaire (51) par rapport au piston primaire (50) et **en ce que** le servomoteur d'assistance au freinage (90, 3, 8) comporte une sortie haute pression reliée à cette chambre de commande (54) par une deuxième canalisation (45) pour commander le piston primaire (50).

5. Système de commande frein selon la revendication **4**, **caractérisé en ce que** le servomoteur d'assistance au freinage est un servomoteur hydraulique (3) et **en ce qu'**il comporte une pompe hydraulique (43) destinée à fournir un fluide sous haute pression au servomoteur d'assistance au freinage (3), ladite vanne de commande (33, 40) permettant de transmettre ce fluide sous haute pression à ladite chambre de commande (54) par la deuxième canalisation (45).

6. Système de commande frein selon la revendication **5**, **caractérisé en ce que** le servomoteur d'assistance au freinage (3) comporte une enceinte d'entrée (30) dans laquelle coulisse un piston de commande (31-32) permettant de commander une première vanne (33-36) qui est mobile dans une chambre de sortie (39) à laquelle est reliée ladite deuxième canalisation (45), cette première vanne (33-36) permettant de commander une deuxième vanne (38-40), laquelle permet de mettre en communication la pompe hydraulique (43) avec la chambre de sortie (39).

7. Système de commande frein selon la revendication **6**, **caractérisé en ce que** le piston de commande (31-32) possède un piston central (32) qui agit sur la première vanne (33-36) et qui coulisse dans un piston annulaire (31) qui coulisse dans l'enceinte d'entrée (30) et qui s'appuie contre un ressort (34) dont le rôle est d'opposer une résistance au déplacement de ce piston annulaire (31) pour simuler un effort de freinage vers l'organe de commande (1).

8. Système de commande frein selon la revendication **6**, **caractérisé en ce que** la première vanne (33-36) permet de relier la chambre de sortie (39) au réservoir de liquide de frein (6) pour permettre un relâchement de la pression dans la chambre de sortie (39) et donc dans la chambre de commande (54) du maître cylindre (5).

9. Système de commande frein selon la revendication **7**, **caractérisé en ce que** le maître cylindre (5) comporte un piston de commande de secours (55) qui peut coulisser dans la chambre de commande (54) sous la commande d'un fluide transmis par le dispositif de pression auxiliaire (2) par une troisième canalisation (49).

10. Système de commande frein selon la revendication **6**, **caractérisé en ce que** le dispositif de pression auxiliaire (2) est situé dans le maître cylindre de frein selon l'axe (XX') de celui-ci et est accolé à ladite chambre de commande (54).

11. Système de commande frein selon la revendication **10**, **caractérisé en ce que** la chambre de commande (54) est séparée de l'enceinte (20) du dispositif de pression auxiliaire (2) par un piston (55) mobile axialement.

12. Système de commande frein selon la revendication **11**, **caractérisé en ce que** le maître cylindre (5) et le servomoteur d'assistance au freinage (3) sont en une seule pièce.

## Claims

1. System for controlling the brakes of a vehicle, comprising a brake master cylinder (5) and a brake booster (90, 3, 8) actuated by a control member (1), in which the brake booster is hydraulically coupled to the brake master cylinder (5) and is not mechanically coupled to the primary piston (50) of the master cylinder, and comprising an auxiliary pressure device (2) controlled by the control member (1) and allowing control of the brake booster (90, 3, 8), **characterized in that** it comprises an isolating valve (64), closed at rest, to isolate the auxiliary pressure device (2) controlled by the control member (1) and the booster (3).

2. Brake control system according to Claim 1, **characterized in that** it comprises a source of hydraulic fluid under pressure connected on command of the auxiliary pressure device (2) to a thrust chamber of the master cylinder (54).

3. Brake control system according to Claim 1 or 2, **characterized in that** the auxiliary pressure device (2) comprises an enclosed space (20) filled with a fluid and a piston (21) which slides in this enclosed space under the control of the control member (1), the said enclosed space being connected by a first line (46) to a control valve (33, 40, 7) of the brake booster (90, 3, 8).

4. Brake control system according to Claim 3, **characterized in that** the brake master cylinder (5) has a control chamber (54) allowing control of the primary piston (50), the said control chamber being situated on the opposite side of the primary piston (50) to the primary chamber (51), and **in that** the brake booster (90, 3, 8) comprises a high-pressure outlet connected to this control chamber (54) by a second line (45) to control the primary piston (50).

5. Brake control system according to Claim 4, **characterized in that** the brake booster is a hydraulic servo (3), and **in that** it comprises a hydraulic pump (43) intended to supply the brake booster (3) with high-pressure fluid, the said control valve (33, 40) allowing this fluid under high pressure to be transmitted to the said control chamber (54) via the second line (45).

6. Brake control system according to Claim 5, **characterized in that** the brake booster (3) comprises an inlet enclosed space (30) in which there slides a control piston (31 - 32) allowing control of a first valve (33 - 36) which is able to move in an outlet chamber (39) to which the second line (45) is connected, this first valve (33 - 36) allowing control of a second valve (38 - 40) which allows the hydraulic pump (43) to be placed in communication with the outlet chamber (39).

7. Brake control system according to Claim 6, **characterized in that** the control piston (31 - 32) has a central piston (32) which acts on the first valve (33 - 36) and which slides in an annular piston (31) which slides in the inlet enclosed space (30) and which presses against a spring (34) the role of which is to offer resistance to the movement of this annular piston (31) in order to simulate a braking action toward the control member (1).

8. Brake control system according to Claim 6, **characterized in that** the first valve (33 - 36) allows the outlet chamber (39) to be connected to the brake fluid reservoir (6) in order to allow the pressure in the outlet chamber (39) and therefore in the control chamber (54) of the master cylinder (5) to be released.

9. Brake control system according to Claim 7, **characterized in that** the master cylinder (5) comprises a backup control piston (55) which can slide in the control chamber (54) under the control of a fluid transmitted by the auxiliary pressure device (2) via a third line (49).

10. Brake control system according to Claim 6, **characterized in that** the auxiliary pressure device (2) is situated in the brake master cylinder along the axis (XX') thereof and is contiguous with the said control chamber (54).

11. Brake control system according to Claim 10, **characterized in that** the control chamber (54) is separated from the enclosed space (20) of the auxiliary pressure device (2) by an axially mobile piston (55).

12. Brake control system according to Claim 11, **characterized in that** the master cylinder (5) and the brake booster (3) are made as a single piece.

## Patentansprüche

1. System zur Steuerung einer Bremse eines Fahrzeugs, mit einem Hauptbremszylinder (5) und einem von einem Steuerorgan (1) betätigten Bremsunterstützungsservomotor (90, 3, 8), bei dem der Bremsunterstützungsservomotor hydraulisch an den Hauptbremszylinder (5) und nicht mechanisch an den Primärkolben (50) des Hauptzylinders gekoppelt ist und das eine Hilfsdruckvorrichtung (2) aufweist, die von dem Steuerorgan (1) gesteuert wird und die Steuerung des Bremsunterstützungsservomotors (90, 3, 8) ermöglicht, **dadurch gekennzeichnet, dass** es ein in der Ruhestellung geschlossenes Ventil (64) zum Trennen der von dem Steuerorgan (1) gesteuerten Hilfsdruckvorrichtung (2) und des Unterstützungsservomotors (3) aufweist.

2. Bremssteuerungssystem nach Anspruch 1, **dadurch gekennzeichnet, dass** es eine Quelle für unter Druck stehendes Hydraulikfluid aufweist, die bei einer Steuerung durch die Hilfsdruckvorrichtung (2) mit einer Schubkammer des Hauptzylinders (54) verbunden wird.

3. Bremssteuerungssystem nach Anspruch 1 oder 2, **dadurch gekennzeichnet, dass** die Hilfsdruckvorrichtung (2) einen mit Fluid gefüllten Raum (20) und einen Kolben (21) aufweist, der durch die Steuerung durch das Steuerorgan (1) in diesem Raum gleitet, wobei der Raum über eine erste Leitung (46) mit einem Steuerventil (33, 40, 7) des Bremsunterstützungsservomotors (90, 3, 8) verbunden ist.

4. Bremssteuerungssystem nach Anspruch 3, **dadurch gekennzeichnet, dass** der Hauptbremszylinder (5) eine Steuerungskammer (54) aufweist, mit der der Primärkolben (50) gesteuert werden kann, wobei die Steuerungskammer in Bezug auf den Primärkolben (50) auf der zur Primärkammer (51) gegenüberliegenden Seite angeordnet ist, und der Bremsunterstützungsservomotor (90, 3, 8) einen Hochdruckauslass aufweist, der über eine zweite Leitung (45) mit dieser Steuerungskammer (54) verbunden ist, um den Primärkolben (50) zu steuern.

5. Bremssteuerungssystem nach Anspruch 4, **dadurch gekennzeichnet, dass** der Bremsunterstützungsservomotor ein hydraulischer Servomotor (3) ist und es eine Hydraulikpumpe (43) aufweist, die dazu vorgesehen ist, ein unter Druck stehendes Fluid zum Bremsunterstützungsservomotor (3) zu leiten, wobei das Steuerventil (33, 40) es ermöglicht, dieses unter Druck stehende Fluid über die zweite Leitung (45) zur Steuerungskammer (54) zu leiten.

6. Bremssteuerungssystem nach Anspruch 5, **dadurch gekennzeichnet, dass** der Bremsunterstützungsservomotor (3) einen Einlassraum (30) aufweist, in dem ein Steuerkolben (31-32) gleitet, der die Steuerung eines ersten Ventils (33-36) ermöglicht, das in einer Auslasskammer (39) beweglich ist, mit der die zweite Leitung (45) verbunden ist, wobei dieses erste Ventil (33-36) eine Steuerung eines zweiten Ventils (38-40) ermöglicht, das eine Verbindung der Hydraulikpumpe (43) mit der Auslasskammer (39) ermöglicht.

7. Bremssteuerungssystem nach Anspruch 6, **dadurch gekennzeichnet, dass** der Steuerkolben (31-32) einen mittleren Kolben (32) aufweist, der auf das erste Ventil (33-36) wirkt und in einem ringförmigen Kolben (31) gleitet, der in dem Einlassraum (30) gleitet und sich an einer Feder (34) abstützt, die dazu dient, einen Widerstand gegen die Verlagerung dieses ringförmigen Kolbens (31) entgegenzusetzen, um eine Bremskraft zum Steuerorgan (1) zu simulieren.

8. Bremssteuerungssystem nach Anspruch 6, **dadurch gekennzeichnet, dass** das erste Ventil (33-36) die Verbindung der Auslasskammer (39) mit dem Bremsflüssigkeitsbehälter (6) ermöglicht, um einen Druckabfall in der Auslasskammer (39) und somit in der Steuerungskammer (54) des Hauptzylinders (5) zu ermöglichen.

9. Bremssteuerungssystem nach Anspruch 7, **dadurch gekennzeichnet, dass** der Hauptzylinder (5) einen Notsteuerkolben (55) aufweist, der unter der Steuerung eines Fluids, das über eine dritte Leitung (49) von der Hilfsdruckvorrichtung (2) geleitet wird, in der Steuerungskammer (54) gleiten kann.

10. Bremssteuerungssystem nach Anspruch 6, **dadurch gekennzeichnet, dass** die Hilfsdruckvorrichtung (2) im Hauptbremszylinder entlang seiner Achse (XX') angeordnet und an der Steuerungskammer (54) angebracht ist.

11. Bremssteuerungssystem nach Anspruch 10, **dadurch gekennzeichnet, dass** die Steuerungskammer (54) durch einen axial beweglichen Kolben (55) von dem Raum (20) der Hilfsdruckvorrichtung (2) getrennt ist.

12. Bremssteuerungssystem nach Anspruch 11, **dadurch gekennzeichnet, dass** der Hauptzylinder (5) und der Bremsunterstützungsservomotor (3) aus einem Stück gebildet sind.
